# EUROPEAN PATENT APPLICATION

(11) **EP 2 879 200 A1**
(43) Date of publication of application: **03.06.2015**
(21) Application number: 13822950.5
(22) Date of filing: 26.07.2013
(51) Int. Cl.: H01M 2/10

(54) **CELL HOLDING CASE AND CELL PACKAGING BODY PROVIDED WITH HOUSING CHAMBER FOR HOUSING SAME**

(30) Priority: 27.07.2012 JP 2012166748
(71) Applicant: Panasonic Intellectual Property Management Co., Ltd., Osaka-shi, Osaka 540-6207 (JP)
(72) Inventor: IMANISHI, Yoshiaki, Chuo-ku, Osaka-shi Osaka 540-6207 (JP); SUMIMOTO, Daisuke, Chuo-ku, Osaka-shi Osaka 540-6207 (JP); KAWAGUCHI, Shinichi, Chuo-ku, Osaka-shi Osaka 540-6207 (JP); HASE, Hiroshi, Chuo-ku, Osaka-shi Osaka 540-6207 (JP)
(74) Representative: Grünecker Patent- und Rechtsanwälte PartG mbB
(86) International application number: PCT/JP2013/004552
(87) International publication number: WO 2014/017103

(57) **Abstract**

A holding case 10 for holding a disc-like flat battery 1 is disclosed. The flat battery 1 is configured such that a sealing plate 6 which also serves as a first electrode surface hermetically seals a battery case 5 which also serves as a second electrode surface, with a ring-shaped gasket 7 interposed therebetween. The holding case 10 is in a resin-made box-like shape having an open end face 13a through which the flat battery 1 can be inserted and removed from an electrode surface of the flat battery 1. A side portion 13 of the holding case 10 is provided with a protrusion 15 which protrudes radially inward from an edge of the side portion closer to the open end face 13a. The protrusion 15 is positioned at a location farther from a bottom portion 14 of the holding case 10 than the thickness of the flat battery 1.

## Description

### TECHNICAL FIELD

The present invention relates to battery holding cases for holding a disk-like flat batteries, and battery packages having a containing space for containing the battery holding case.

### BACKGROUND ART

Disc-like flat batteries, such as coin batteries, etc., are thin and small, and therefore, infants may accidentally swallow them.

Thus, to avoid the accidental swallowing, electronic devices using a coin battery as a power source include a lock mechanism that locks the containing space for containing the coin battery so that the coin battery cannot be easily removed by infants.

However, if a coin battery is removed from the battery package in which the coin battery has been stored, but left unattended without replacement of batteries, or an infant brakes the blister pack by himself/herself, there is a possibility that infants may accidentally swallow the coin battery. Further, when a coin battery is accidentally swallowed, saliva may cause the electrolysis of water, which generates an alkaline liquid from the coin battery, and this may cause damage to the body.

Further, although the replaced coin batteries are suggested to be insulated before disposal, such as adhering resin tape to avoid a short circuit, if a lot of naked coin batteries are left uninsulated and piled in a collecting box, batteries overlapping each other may be bridged and form a circuit, and may cause a short circuit. Especially in the case where the coin batteries have a remaining capacity, the short circuit may lead to heat generation, explosion, or liquid leakage.

To avoid this, Patent Document 1, for example, discloses applying substances such as bitter agents, which infants dislike, to a surface of the coin battery so that infants who accidentally put a coin battery in their mouths may immediately spit the battery out to avoid swallowing of the battery into their bodies.

Patent Document 2 discloses covering the coin battery, except an electrode terminal, with an insulator having a rectangular outer shape so that infants who accidentally put a coin battery in their mouths may feel uncomfortable in their mouths to avoid swallowing of the battery into their bodies.

### CITATION LIST

### PATENT DOCUMENT

Patent Document 1: Japanese Patent Publication No. S59-44762
Patent Document 2: Japanese Utility Model Publication No. S59-192262

### SUMMARY OF THE INVENTION

### TECHNICAL PROBLEM

If the substances such as bitter agents are applied to the surface of the coin battery, the coin battery may have a poor contact when inserted in the electronic devices.

Further, if the coin battery is covered with a rectangular insulator, it changes the outer dimensions of the coin battery. Accordingly, the coin battery is less versatile, and can only be used in a limited range of electronic devices.

Moreover, effective solutions for a short circuit fault during collection of naked coin batteries have not yet been developed. In particular, if a plurality of coin batteries overlap one another, with the positive electrodes and the negative electrodes of the respective coin batteries touching each other, a short circuit chain occurs in the plurality of coin batteries, and therefore, heat may be generated due to a short circuit current, which may lead to ignition.

The present invention was made in view of the above problems, and it is a main objective of the invention to provide a battery holding case which can avoid accidental swallowing of a disk-like flat battery and significantly reduce damage to a body even in the event of accidental swallowing, and moreover a battery holding case which can avoid a short circuit fault during collection of the disk-like flat batteries.

### SOLUTION TO THE PROBLEM

A battery holding case of the present invention for holding a disk-like flat battery, wherein the flat battery is configured such that a sealing plate which also serves as a first electrode surface hermetically seals a battery case which also serves as a second electrode surface, with a ring-shaped gasket interposed between the battery case and the sealing plate, the holding case is in a resin-made box-like shape having an open end face through which the flat battery can be inserted and removed from an electrode surface of the flat battery, a side portion of the holding case is provided with a protrusion which protrudes radially inward from an edge of the side portion closer to the open end face, and the protrusion is positioned at a location farther from a bottom portion of the holding case than a thickness of the flat battery.

In the above configuration, the side portion of the holding case is provided with a protrusion which protrudes radially inward from an edge of the side portion closer to the open end face. Thus, storing the replaced battery in the holding case during collection can prevent a short circuit fault, particularly a short circuit chain, during the collection.

In the battery package according to the present invention, the flat battery is held in the battery holding case, and in this state the flat battery is contained in the containing space of the battery package. The user who bought this battery package on the market removes the battery holding case, which holds the flat battery, from the battery package, and then takes the battery out of the battery holding case before he/she inserts the battery in an electronic device. Thus, even if the flat battery removed from the battery package is left unattended until it is inserted in the electronic device, the battery can be prevented from being accidentally swallowed by an infant because the battery is held in the battery holding case. In addition, even in the event of accidental swallowing, the battery is protected from contact with a liquid, such as saliva, which therefore reduces the possibility of generation of an alkaline liquid and significantly reduces damage to the body. Moreover, the waste battery replaced by a new battery can be immediately stored in the empty battery holding case in which the new battery was stored, thereby making it possible to prevent a short circuit fault in collecting the batteries.

### ADVANTAGES OF THE INVENTION

According to the present invention, it is possible to provide a battery holding case of a simple structure which can serve as a measure for preventing accidental swallowing of a battery and a measure for reducing damage to a body, and can prevent a short circuit fault in collecting disk-like flat batteries.

### BRIEF DESCRIPTION OF THE DRAWINGS

FIG. 1 is a cross-sectional view of a configuration of a disk-like flat battery according to the first embodiment of the present invention.
FIG. 2(a) to FIG. 2(c) show cross-sectional views illustrating the steps of holding the battery of the first embodiment of the present invention in a holding case.
FIG. 3 is an oblique view of another configuration of the holding case of the first embodiment of the present invention.
FIG. 4 is a cross-sectional view of the holding case holding a battery.
FIG. 5 is a cross-sectional view of a variation of the first embodiment of the present invention.
FIG. 6(a) to FIG. 6(c) show cross-sectional views of a variation of the first embodiment of the present invention.
FIG. 7(a) to FIG. 7(c) show cross-sectional views illustrating the steps of holding a battery of the second embodiment of the present invention in a holding case.
FIG. 8 is a plan view of a configuration of the holding case of the second embodiment of the present invention.
FIG. 9 illustrates a configuration of a battery package of the second embodiment of the present invention. FIG. 9(a) is a plan view. FIG. 9(b) is a cross-sectional view taken along the line B-B of FIG. 9(a).
FIG. 10(a) to FIG. 10(c) show cross-sectional views illustrating other steps of holding the battery of the second embodiment of the present invention in the holding case.
FIG. 11 is a cross-sectional view of the enlarged holding case in the state shown in FIG. 10(c).
FIG. 12 is an oblique view showing a variation of the holding case of the second embodiment of the present invention.
FIG. 13 is a cross-sectional view of another variation of the holding case of the second embodiment of the present invention.
FIG. 14(a) and FIG. 14(b) show cross-sectional views illustrating the steps of holding batteries with different thicknesses in the holding case.

### DESCRIPTION OF EMBODIMENTS

Embodiments of the present invention will be described in detail below based on the drawings. The present invention is not limited to the embodiments below. Further, the embodiments can be properly modified without deviating from the effective scope of the present invention.

(First Embodiment)

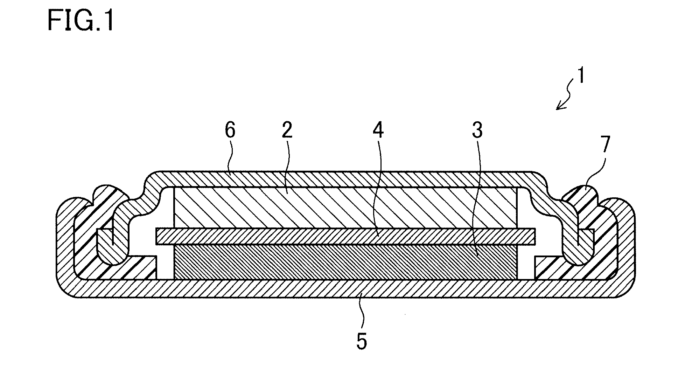

FIG. 1 is a cross-sectional view which schematically illustrates a configuration of a disk-like flat battery 1 according to the first embodiment of the present invention. The disc-like flat battery 1 is a thin, disc-like battery, such as a coin battery. The battery may be any type. For example, the battery may be a primary battery or a secondary battery. Hereinafter, the disc-like flat battery 1 is simply referred to as a "battery." The battery shown in FIG. 1 as an example is a lithium battery.

As shown in FIG. 1, a negative electrode 2 having lithium or a lithium alloy as a negative electrode active material, and a positive electrode 3 having graphite fluoride as a positive electrode active material, with a separator 4 interposed therebetween, are housed in a battery case 5 together with an electrolyte. The opening of the battery case 5 is sealed with a sealing plate 6 via a ring gasket 7. The positive electrode 3 is in contact with a bottom of the battery case 5, and the bottom of the battery case 5 also serves as a positive electrode surface. The negative electrode 2 is in contact with the sealing plate 6, and an upper surface of the sealing plate 6 also serves as a negative electrode surface. The outer diameter of the negative electrode surface 6 is smaller than the outer diameter of the positive electrode surface 5, and a negative electrode terminal forms a protruding electrode portion.

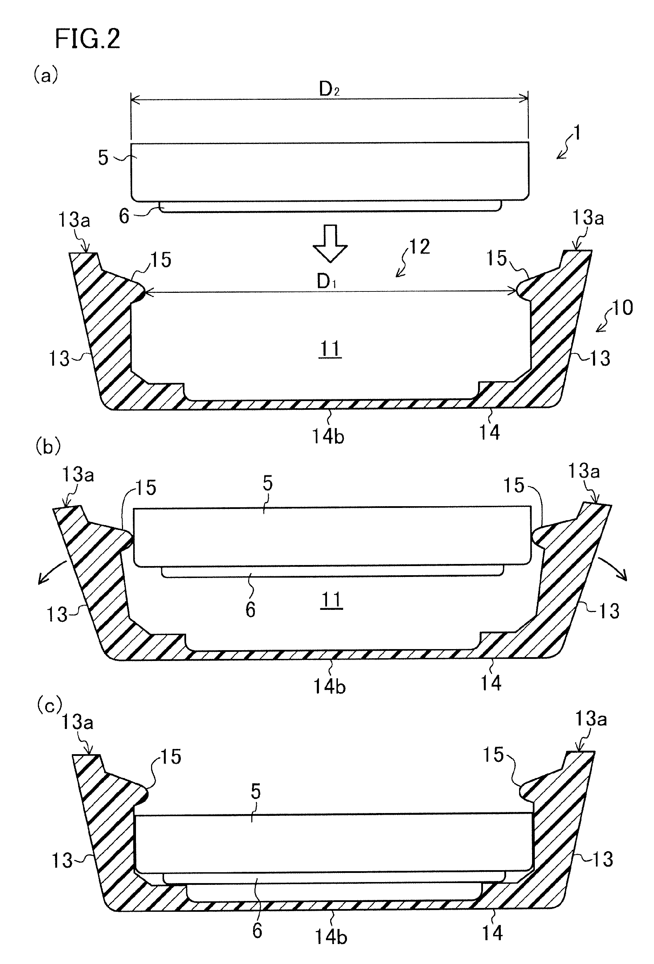

FIG. 2(a) to FIG. 2(c) are cross-sectional views illustrating the steps of holding (i.e., containing) the battery 1 in a battery holding case (hereinafter simply referred to as a "holding case") 10. Here, only the positive electrode surface 5 and the negative electrode surface 6 are shown as the battery 1.

As shown in FIG. 2(a), the holding case 10 is in a resin-made box-like shape having a side portion 13 and a bottom portion 14 which hold the side surface and/or the bottom surface of the battery 1, and an open end face 13a through which the battery 1 is inserted and removed from an electrode surface of the battery 1. This means that the holding case 10 has an opening 12 through which the battery 1 can be inserted and removed, and an accommodation space 11 for accommodating the battery 1. The side portion 13 of the holding case 10 is provided with a protrusion 15 which protrudes radially inward from an edge of the side portion 13 closer to the open end face 13a. The protrusion 15 is positioned at a location farther from the bottom portion of the holding case 10 than the thickness of the battery 1. Further, the protrusion 15 is in a ring shape, and the inner diameter D₁ of the protrusion 15 is smaller than the outer diameter D₂ of the battery 1. Moreover, the protrusion 15 is integrally formed with the holding case 10.

When the battery 1 is inserted in the accommodation space 11 of the holding case 10 in the arrow direction as shown in FIG. 2(a), the periphery of the positive electrode surface 5 of the battery 1 comes in contact with the protrusion 15 as shown in FIG. 2(b). As shown in FIG. 2(b), if the holding case 10 is made of a deformable elastic member, the side portion 13 of the holding case 10 is deformed while expanding radially outward as the battery 1 enters the accommodation space 11 of the holding case 10. As shown in FIG. 2(c), after the battery 1 passes by the protrusion 15, the side portion 13 returns to its original position due to the elasticity. The battery 1 is held in the accommodation space 11 while being supported by the side portion 13 of the holding case 10.

In the present invention, since the side portion of the holding case 10 is provided with the protrusion 15 protruding radially inward from the edge of the side portion closer to the open end face 13a, the replaced battery 1 can be stored in the holding case 10 for collection, which can prevent a short circuit fault during the collection. In particular, the battery 1 is stored in the accommodation space 11 of the holding case 10 at a location closer to the bottom portion 14 than the protrusion 15, since the protrusion 15 is provided at a location farther from the bottom portion 14 of the holding case 10 than the thickness of the battery 1. This means that the positive electrode surface 5 of the battery 1 is apart from the open end face 13a of the holding case 10. Thus, even if the holding cases 10 overlap one another during the collection, it is possible to prevent a short circuit fault due to contact between the batteries 1.

An emetic agent may be applied to the side portion 13 of the holding case 10 and/or an outer surface of the bottom portion 14. Thus, even if an infant accidentally puts the battery 1 in his/her mouth, the emetic agent makes the infant immediately spit the battery out, and prevents the infant from swallowing the battery into his/her body. Here, no emetic agent is applied to the battery 1. Thus, the battery 1 does not have a poor contact when inserted in electronic devices.

In the present embodiment, the resin material used for the holding case 10 is not limited, but it is preferable that the side portion 13 of the holding case 10 is configured by a resin material that is flexible enough to be deformed while expanding outward as shown in FIG. 2(b). As an example resin material for the holding case 10, polyolefin-based elastomer resin having similar properties as rubber can be used.

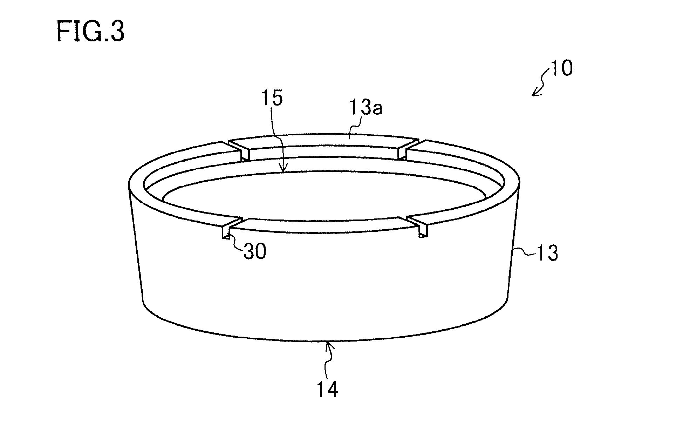

Further, in order to make the side portion 13 of the holding case 10 more deformable, it is preferable to form a slit 30 in the side portion 13 near the open end face 13a of the holding case 10 as shown in the oblique view of FIG. 3. The shape, the size, and the number of the slits 30 are not specifically limited, but as shown in FIG. 3, for example, a plurality of slits 30 may be formed along the ring-shaped open end face 13a at equal intervals.

Further, as shown in FIG. 2(c), it is preferable that the bottom portion 14 of the holding case 10 includes a thin portion 14b which is thinner than the other portion. Thus, in taking the battery 1 out of the holding case 10, the battery 1 can be more easily removed since the side portion 13 of the holding case 10 expands outward more easily by pushing the thin portion 14b of the bottom portion 14 of the holding case 10.

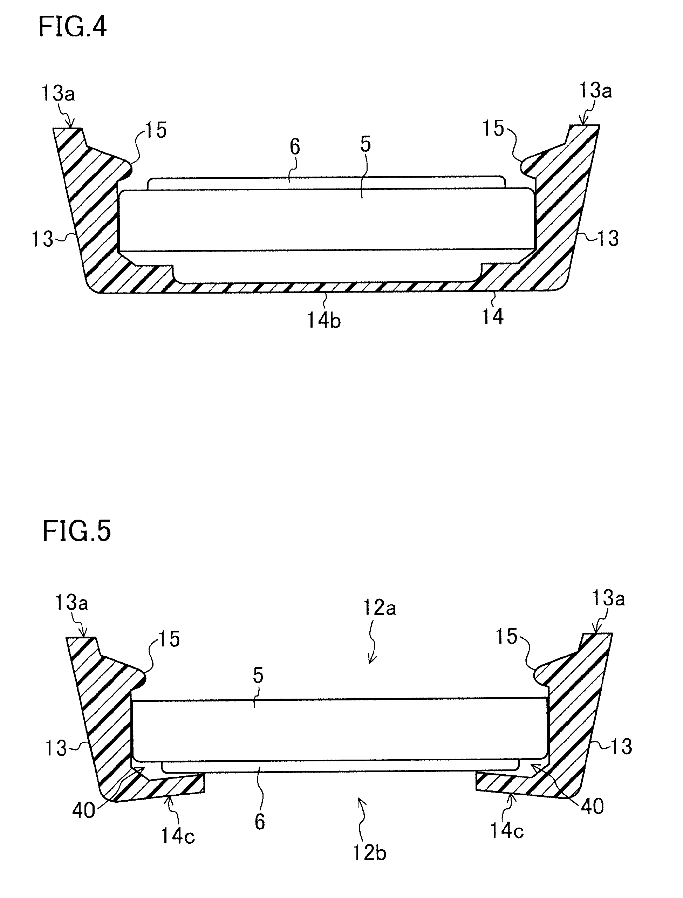

In FIG. 2(c), the battery 1 is stored in the holding case 10 such that the negative electrode surface 6 of the battery 1 faces the bottom portion 14 of the holding case 10, but as shown in FIG. 4, the battery 1 may be stored in the holding case 10 such that the positive electrode surface 5 of the battery 1 faces the bottom portion 14 of the holding case 10. In this case, as well, the battery 1 is stored in the accommodation space 11 of the holding case 10 at a location closer to the bottom portion 14 than the protrusion 15, and therefore, the negative electrode surface 6 of the battery 1 is apart from the open end face 13a of the holding case 10. Thus, even if the holding cases 10 overlap one another during the collection, it is possible to prevent a short circuit fault due to contact between the batteries 1.

The shape of the protrusion 15 of the present embodiment is not specifically limited, and may be formed into a ring shape, or a plurality of protrusions 15 are provided along an inner circumference of the side portion of the holding case 10 at equal intervals.

FIG. 5 shows a variation of the first embodiment of the present invention.

As shown in FIG. 5, in the present variation, the bottom portion 14 of the holding case 10 is provided with an opening 12b. When the battery 1 is inserted into the accommodation space 11 of the holding case 10 from the opening 12a in a similar manner as illustrated in FIGS. 2(a) to 2(c), the side portion 13 of the holding case 10 is deformed while expanding radially outward, and after the battery 1 passes by the protrusion 15, the battery 1 is held in the accommodation space 11 while being supported by the side portion 13 of the holding case 10. The battery 1 inserted in the accommodation space 11 does not come off through the opening 12b since an opening edge 14c of the bottom portion 14 serves as a stopper.

In the present variation, the battery 1 held in the accommodation space 11 of the holding case 10 can be easily removed by pushing the battery 1 from the opening 12b of the holding case 10.

In the event of accidental swallowing of the holding case 10 holding the battery 1, the electrolysis of water due to saliva, etc., occurs near the sealed portion where the gasket 7 is exposed, in the battery 1 shown in FIG. 1. Thus, to avoid damage from the electrolysis to a body in the event of the above accidental swallowing, it is preferable that the opening edge 14c is tilted toward the accommodation space 11 so that the opening edge 14c touches the negative electrode surface 6 (or the positive electrode surface 5) of the battery 1 and prevents saliva, etc., from entering into a gap 40 including the exposed portion of the gasket 7, as shown in FIG. 5.

In the present embodiment, the box-like shape of the holding case 10 is not limited to any specific shape, and may be in any shape as long as it has an open end face which allows the battery 1 to be inserted and removed from the electrode surface, and a side portion. For example, the outer shape of the holding case 10 may not only be a circular shape, but may also be a polygonal shape in plan view.

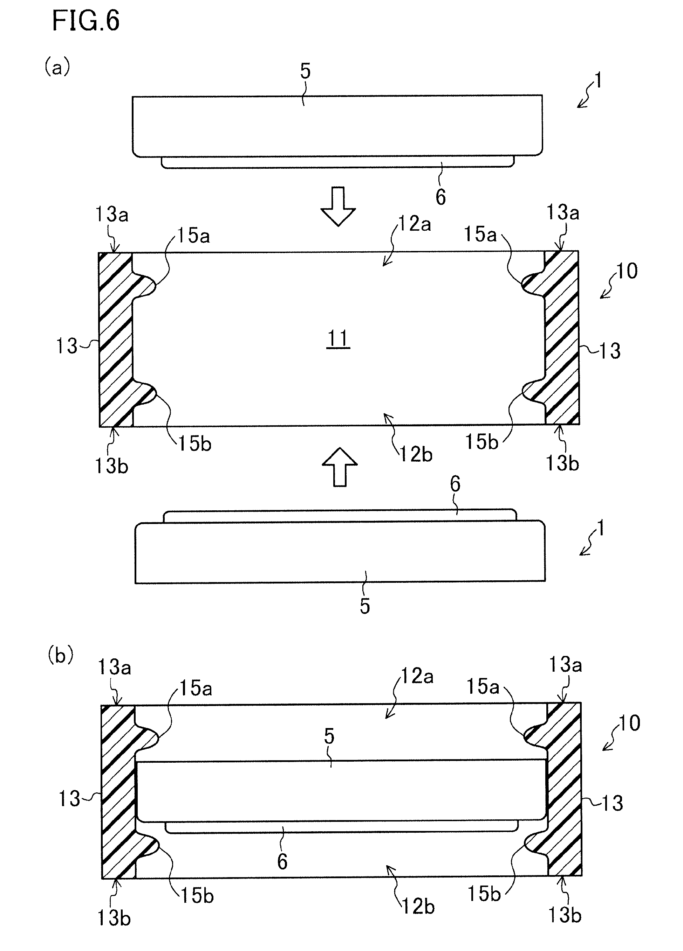

FIGS. 6(a) and 6(b) show another variation of the first embodiment of the present invention.

As shown in FIG. 6(a), the holding case 10 of the present variation is in a resin-made box-like shape having a first open end face 13a through which the battery 1 is inserted and removed from the electrode surface, and a second open end face 13b which is located opposite to the first open end face 13a and through which the battery 1 is inserted and removed from the electrode surface. This means that the holding case 10 has openings 12a, 12b through which the battery 1 can be inserted and removed in two directions, and an accommodation space 11 for accommodating the battery 1. The side portion 13 of the holding case 10 is provided with a first protrusion 15a which protrudes radially inward from an edge of the side portion 13 closer to the first open end face 13a, and a second protrusion 15b which protrudes radially inward from an edge of the side portion 13 closer to the second open end face 13b. The distance between the first protrusion 15a and the second protrusion 15b is greater than the thickness of the battery 1.

As shown in FIG. 6(a), when the battery 1 is inserted in the accommodation space 11 of the holding case 10 in the arrow direction from the opening 12a, for example, the side portion 13 of the holding case 10 is deformed while expanding radially outward, and the battery 1 is held in the accommodation space 11 while being supported by the side portion 13 of the holding case 10 as shown in FIG. 6(b). The battery 1 inserted in the accommodation space 11 does not come off through the opening 12b since the protrusion 15b provided closer to the opening 12b serves as a stopper. As a result, the battery 1 is stored in the accommodation space 11 between the first protrusion 15a and the second protrusion 15b.

In the present variation, since the side portion 13 of the holding case 10 is provided with the protrusions 15a, 15b which protrude radially inward from the edges closer to the open end face 13a, 13b, respectively, storing the replaced battery 1 in the holding case 10 during collection can prevent a short circuit fault during the collection. In particular, since the distance between the first protrusion 15a and the second protrusion 15b is greater than the thickness of the battery 1, the battery 1 is stored between the first protrusion 15a and the second protrusion 15b in the accommodation space 11 of the holding case 10. This means that the electrode surface of the battery 1 is apart from the open end faces 13a, 13b of the holding case 10. Thus, even if the holding cases 10 overlap one another during the collection, it is possible to prevent a short circuit fault due to contact between the batteries 1.

In the present variation, the box-like shape of the holding case 10 is not limited to any specific shape, and may be in any shape as long as it has two opposed open end faces which allow the battery 1 to be inserted and removed from the electrode surface, and a side portion. For example, the outer shape of the holding case 10 may not only be a circular shape, but may also be a polygonal shape in plan view.

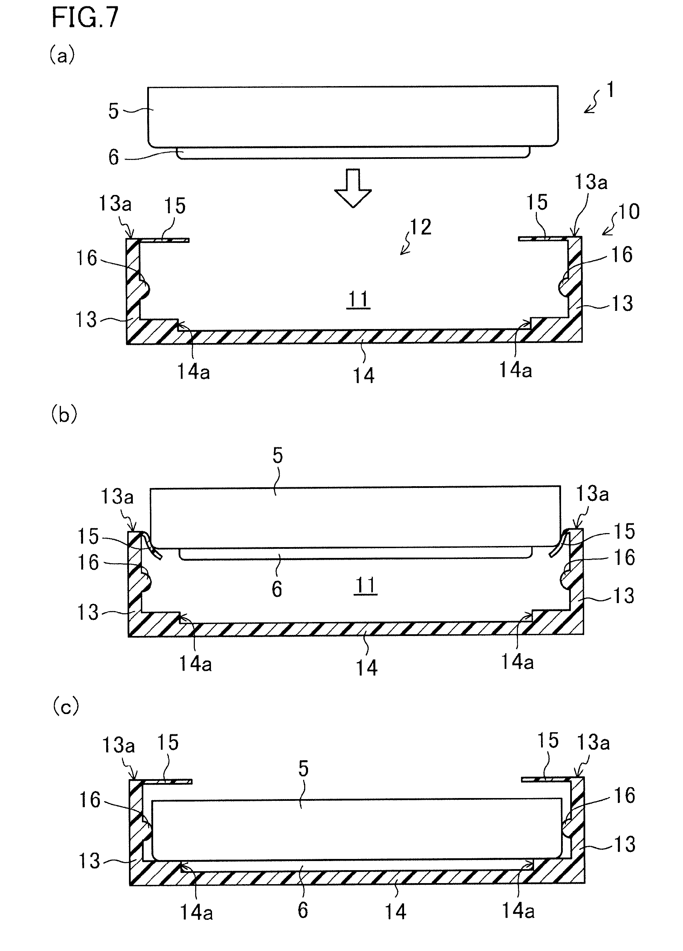

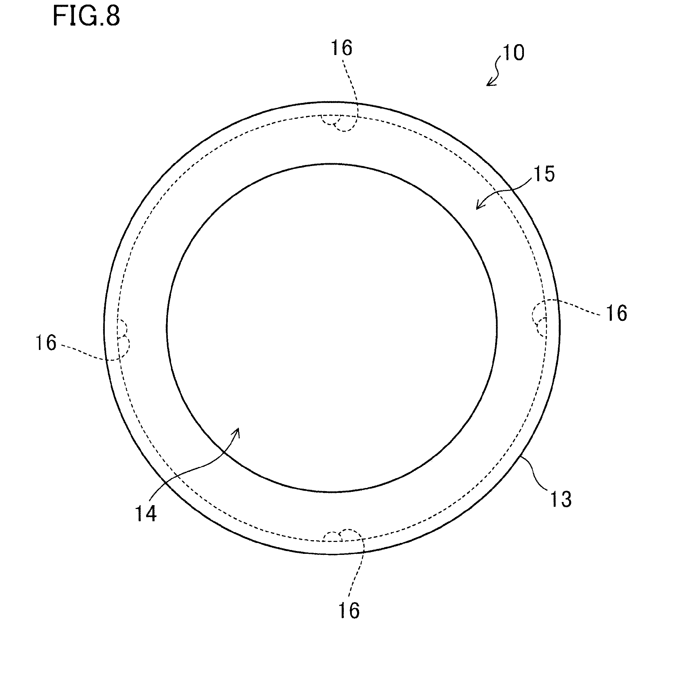

### (Second Embodiment) FIG. 7(a) to 7(c) are cross-sectional views illustrating the steps for holding a battery 1 of the second embodiment of the present invention in a holding case (a resin case) 10. FIG. 8 is a plan view of the holding case 10. Here, only the positive electrode surface 5 and the negative electrode surface 6 are shown as the battery 1.

As shown in FIG. 7(a) and FIG. 8, the holding case 10 has an opening 12 through which the battery 1 can be inserted and removed from an electrode surface of the battery 1, and a side portion 13 and a bottom portion 14 which hold the side surface and/or the bottom surface of the battery 1. This means that an accommodation space 11 for accommodating the battery 1 is formed in the holding case 10. The holding case 10 also has a ring-shaped protrusion 15 which protrudes radially inward from an open end face 13a of the side portion 13. The protrusion 15 is supported on the open end face 13a in a bendable manner. Further, an emetic agent is applied to the outer surfaces of the side portion 13 and/or the bottom portion 14 of the holding case 10.

A raised portion 16 which energizes the side surface of the battery 1 is formed on the inner circumferential surface of the side portion 13 of the holding case 10. The shape of the raised portion 16 is not specifically limited, but as shown in FIG. 8, four raised portions 16 may be provided on the side portion 13 of the holding case 10 with equal intervals between each other in a circumferential direction of the side portion 13, for example. Further, a recessed portion 14a is formed in the bottom portion 14 of the holding case 10, for receiving the protruding electrode portion including the negative electrode surface 6.

When the battery 1 is inserted in the accommodation space 11 of the holding case 10 in the arrow direction as shown in FIG. 7(a), the periphery of the positive electrode surface 5 of the battery 1 comes in contact with the ring-shaped protrusion 15 as shown in FIG. 7(b). If the protrusion 15 is made of a deformable elastic member, the protrusion 15 is deformed as the battery 1 enters the accommodation space 11 of the holding case 10 as shown in FIG. 7(b). Then, as shown in FIG. 7(c), the protruding electrode portion including the negative electrode surface 6 is buried in the recessed portion 14a formed in the bottom portion 14 of the holding case 10. After the battery 1 passes by the protrusion 15, the protrusion 15 returns to its original position due to the elasticity. In this state, the side surface of the battery 1 is held in the accommodation space 11 by being energized by the raised portion 16 formed on the side portion 13 of the holding case 10.

In the present embodiment, an emetic agent is applied to the outer surfaces of the side portion 13 and/or the bottom portion 14 of the holding case 10 which holds the battery 1. Thus, even if an infant accidentally puts the battery 1 in his/her mouth, the emetic agent makes the infant immediately spit the battery out, and prevents the infant from swallowing the battery into his/her body. Here, no emetic agent is applied to the battery 1. Thus, the battery 1 does not have a poor contact when inserted in electronic devices.

Further, since the protruding electrode portion including the negative electrode surface 6 is buried in the recessed portion 14a formed in the bottom portion 14 of the holding case 10, insulation between the negative electrode surface 6 and the positive electrode surface 5 is ensured by the bottom portion 14 of the holding case 10. Accordingly, a short circuit fault can be avoided during collection of replaced batteries 1 by accommodating the respective replaced batteries 1 in the holding case 10.

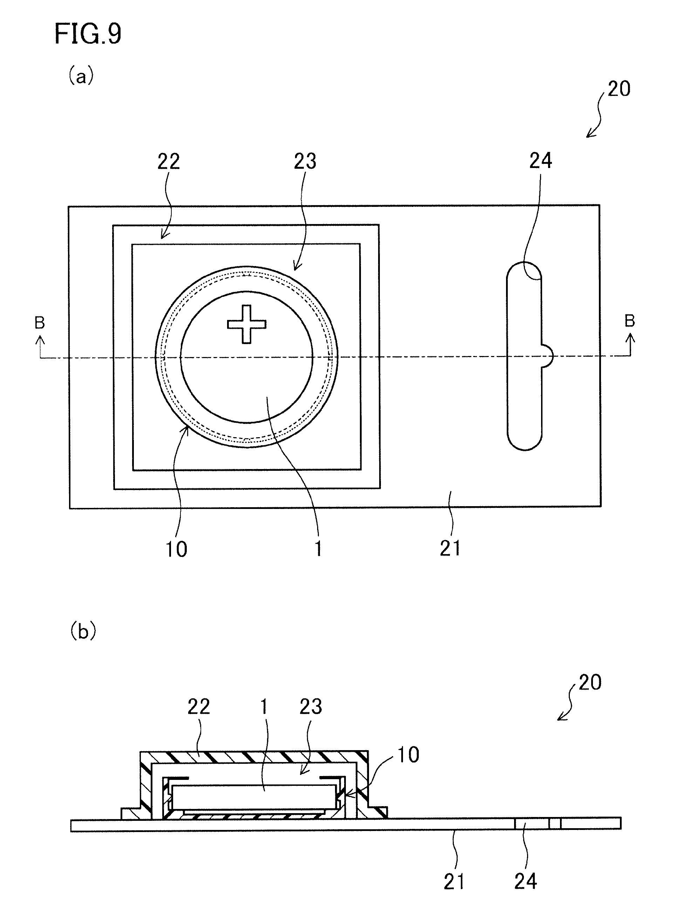

FIG. 9 schematically shows a configuration of a battery package 20 containing the flat battery 1 according to the present embodiment. FIG. 9(a) is a plan view. FIG. 9(b) is a cross-sectional view taken along the line B-B of FIG. 9(a).

As shown in FIGS. 9(a) and 9(b), the battery package 20 is a blister pack including a main cover 22 which forms a containing space 23 for containing the flat battery 1, and a base 21 which closes the containing space 23 of the main cover 22. The flat battery 1 is contained in the containing space 23 while being held in the holding case 10. The base 21 is provided with a hole 24 so that the battery package 20 may be hung.

The user who bought the battery package 20 on the market removes the holding case 10, in which the battery 1 is held, from the battery package 20, and then takes the battery 1 out of the holding case 10 before he/she inserts the battery 1 in an electronic device. Thus, even if the battery 1 removed from the battery package 20 is left unattended until it is inserted in the electronic device, the battery 1 can be prevented from being accidentally swallowed by an infant because the battery 1 is held in the holding case 10. Further, the holding case 10 from which the battery 1 has been taken out can be used again to accommodate the replaced battery 1 during collection of the replaced battery 1. As a result, it is possible to prevent a short circuit fault during the collection of the battery.

The battery 1 can be taken out of the holding case 10 by pushing the bottom portion 14 of the holding case 10 in a direction toward the battery 1 against the energizing force of the raised portion 16. The battery 1 can be taken out more easily particularly because the recessed portion 14a formed in the bottom portion 14 of the holding case 10 has a thin resin thickness.

When the battery 1 is inserted from the negative electrode surface 6 as shown in FIGS. 7(a) to 7(c), the protruding electrode portion including the negative electrode surface 6 is buried in the recessed portion 14a formed in the bottom portion 14 of the holding case 10. It is thus possible to prevent a short circuit fault between the positive electrode surface 5 and the negative electrode surface 6.

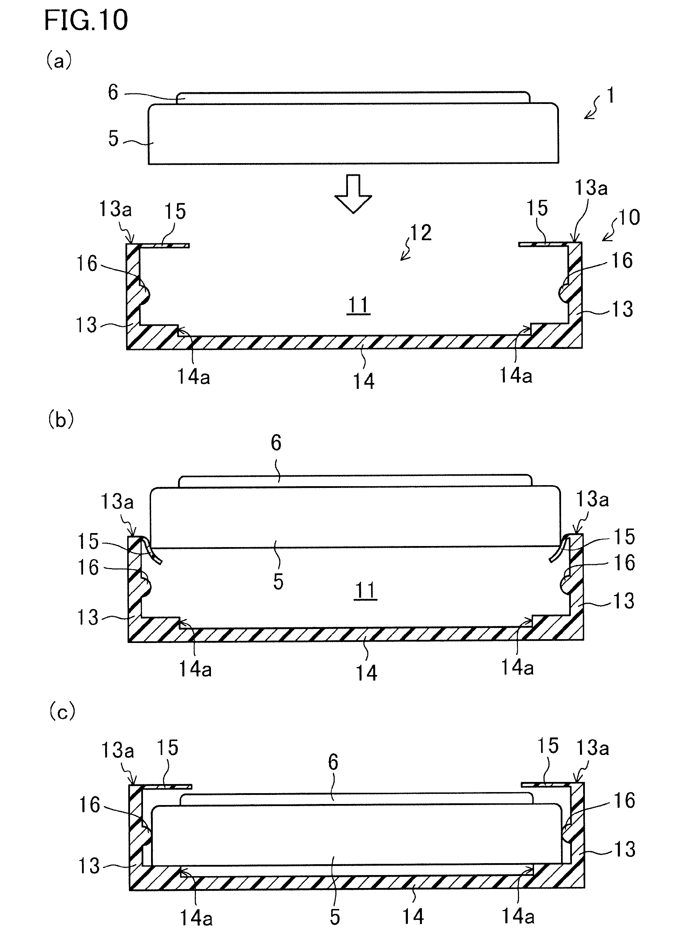

However, it may happen that the user inserts the battery 1 from the positive electrode surface 5 as shown in FIGS. 10(a) to 10(c).

In the present invention, it is possible to prevent a short circuit fault between the positive electrode surface 5 and the negative electrode surface 6 in such a situation as well. Explanation will be made below with reference to FIGS. 10(a) to 10(c).

First, when the battery 1 is inserted in the accommodation space 11 of the holding case 10 in the arrow direction as shown in FIG. 10(a), the periphery of the positive electrode surface 5 of the battery 1 comes in contact with the ring-shaped protrusion 15, and the protrusion 15 is deformed as shown in FIG. 10(b). Then, as shown in FIG. 10(c), the positive electrode surface 5 comes in contact with the bottom portion 14 of the holding case 10 and stops there, because the outer diameter of the positive electrode surface 5 is greater than the outer diameter of the negative electrode surface 6. After the battery 1 passes by the protrusion 15, the protrusion 15 returns to its original position due to the elasticity. In this state, the side surface of the battery 1 is held in the accommodation space 11 by being energized by the raised portion 16 formed on the side portion 13 of the holding case 10.

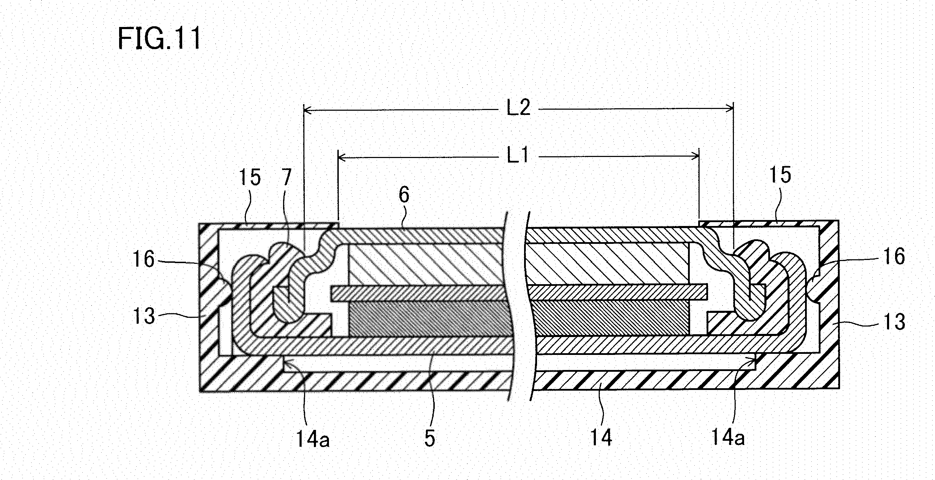

FIG. 11 is an enlarged cross-sectional view of the holding case in the state shown in FIG. 10(c).

As shown in FIG. 11, the battery 1 is not buried in the recessed portion 14a formed in the bottom portion 14 of the holding case 10. Thus, the battery 1 is held in the accommodation space 11 at a position closer to the protrusion 15 by the depth of the recessed portion 14a, compared to the position shown in FIG. 7(c).

As shown in FIG. 11, if the inner diameter L1 of the protrusion 15 is smaller than the inner diameter L2 of an exposed portion of the gasket 7, the protrusion 15 overlaps the positive electrode surface 5. Accordingly, even when the replaced battery 1 is accommodated in holding case 10 for collection, it is possible to prevent a short circuit fault between the positive electrode surface 5 and the negative electrode surface 6.

In FIG. 11, the radially inward end of the protrusion 15 is in contact with the negative electrode surface 6 of the battery 1. However, even if the radially inward end of the protrusion 15 is not in contact with the negative electrode surface 6, and there is some gap between the radially inward end of the protrusion 15 and the negative electrode surface 6, it is possible to prevent a short circuit fault between the positive electrode surface 5 and the negative electrode surface 6 as long as the radially inward end of the protrusion 15 overlaps with the positive electrode surface 5.

In the present embodiment, materials for the emetic agent applied to the outer surfaces of the side portion 13 and/or the bottom portion 14 of the holding case 10 are not specifically limited as long as they are substances with a taste that makes people spit the substances out of their mouths. For example, denatonium benzoate, chrysanthemum extracts, cork tree extracts, etc., can be used as bitter substances. Capsaicin, sinigrin, etc., can be used as pungent substances. Instead of applying the emetic agent to the outer surfaces of the holding case 10, the emetic agent may be mixed beforehand in the resin which forms the holding case 10.

In the present embodiment, materials for the holding case 10 are not specifically limited. For example, polypropylene (PP), polyethylene terephthalate (PET), etc., can be used as the materials for the holding case 10. The side portion 13, the bottom portion 14, and the protrusion 15 of the holding case 10 may be integrally formed by injection molding. Alternatively, the protrusion 15 made of a deformable elastic member may be insert molded during molding of the holding case 10.

Further, directions, etc., for use of the flat battery 1 may be shown on the bottom portion 14 of the holding case 10. For example, safety cautions (regarding accidental swallowing, short circuits, etc.) may be shown on the bottom portion 14 of the holding case 10.

In the present invention, the flat battery 1 is held in the holding case 10, and in this state the flat battery 1 is contained in the containing space 23 of the battery package 20, such as a blister pack. Further, a function for preventing accidental swallowing and a function for preventing a short circuit are added to the holding case 10 to avoid accidental swallowing and a short circuit fault. The holding case 10 can be achieved in a very simple configuration. Moreover, the dimensions of the holding case 10 are determined according to battery specifications. Thus, the holding case 10 is highly versatile, and therefore, the resin case 10 can not only be used in the battery package 20, but also be used as a holding case 10 for holding a battery.

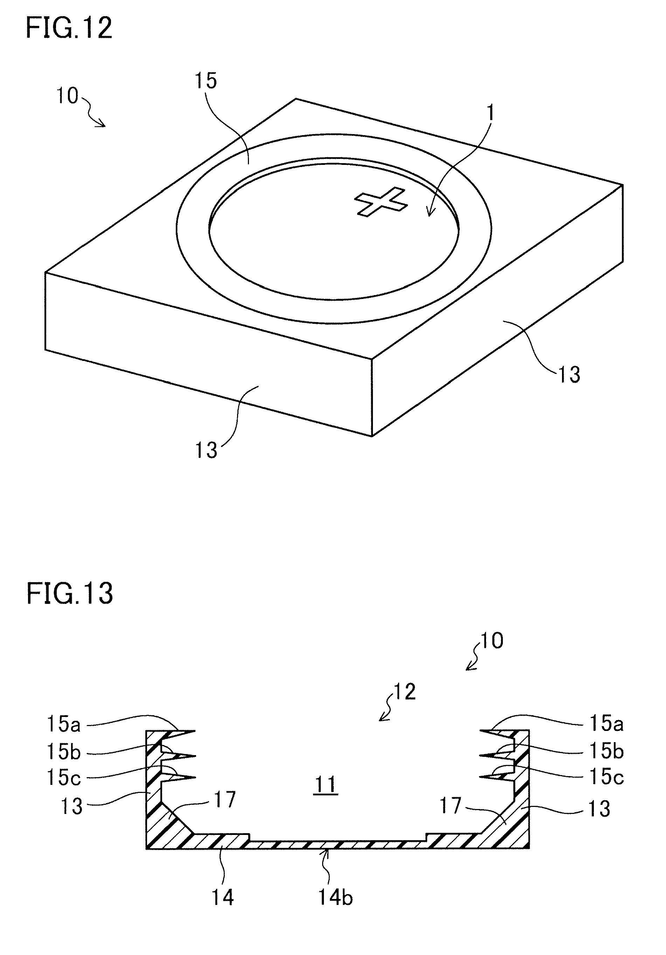

FIG. 12 is an oblique view of a variation of the holding case 10 according to the present embodiment.

The holding case 10 shown in FIG. 7(a) and FIG. 8 has a function for preventing accidental swallowing by applying an emetic agent to the outer surfaces of the side portion 13 and/or the bottom portion 14 of the holding case 10. However, in the present variation, the holding case 10 itself has a rectangular outer shape to give the holding case 10 the function for preventing accidental swallowing.

The open end face of the holding case 10 shown in FIG. 12 through which the battery 1 is inserted and removed is in a circular shape whose diameter is almost the same as the diameter of the positive electrode surface 5 of the battery 1, and includes a ring-shaped protrusion 15 which protrudes radially inward from an edge of the open end face. On the other hand, the side portion 13 of the holding case 10 is in a quadrangle shape in plan view.

According to the present variation, the infant who accidentally puts the holding case 10 holding the battery 1 in his/her mouth may feel uncomfortable in the mouth since the holding case 10 is in a square shape. It is therefore possible to prevent the infant from swallowing the battery into his/her body. The outer shape of the holding case 10 is not limited to a quadrangle shape in plan view, but may be a polygonal shape.

FIG. 13 is a cross-sectional view of another variation of the holding case 10 according to the present embodiment.

As shown in FIG. 13, the holding case 10 has an opening 12 through which the battery 1 is inserted and removed from the electrode surface of the battery 1, a side portion 13 and a bottom portion 14 which hold the side surface and/or the bottom surface of the battery 1, and three ring-shaped protrusions 15a, 15b, 15c which protrude radially inward from the side portion 13. Each of the protrusions 15a, 15b, 15c is supported on the side portion 13 in a bendable manner, and the inner diameter of each of the protrusions 15a, 15b, 15c is smaller than the inner diameter of the exposed portion of the gasket (not shown). A thin portion 14b with a reduced thickness is formed at a central portion of the bottom portion 14. A tapered surface 17 is formed at a corner formed by the side portion 13 and the bottom portion 14.

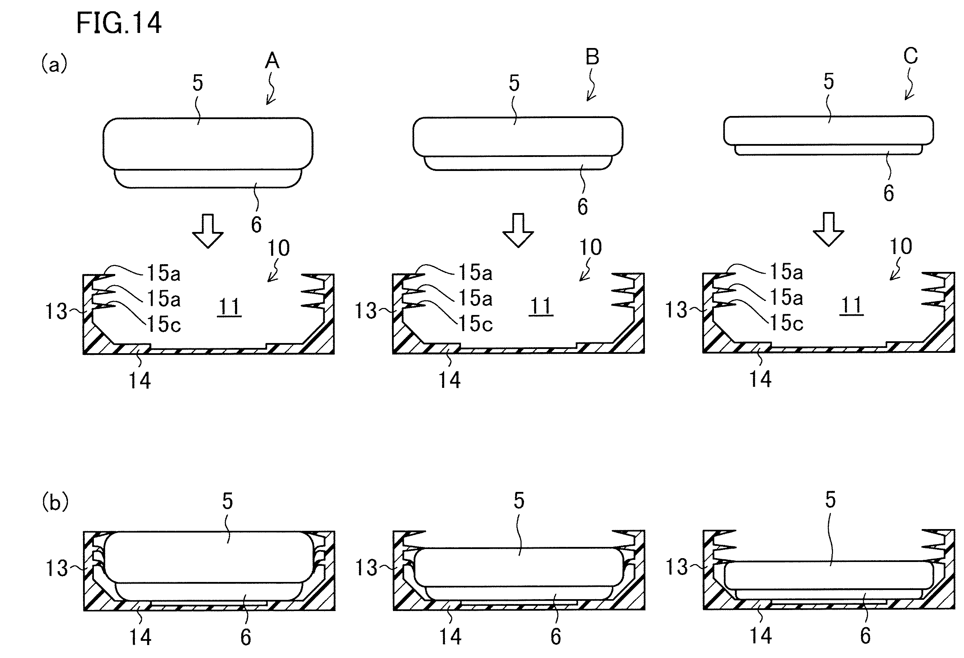

FIGS. 14(a) and 14(b) show cross-sectional views illustrating the steps for holding (i.e., containing) three types of batteries A, B, C having different thicknesses in the holding case 10.

As shown in FIG. 14(b), when the thickest battery A is contained in the holding case 10, the protrusion 15a overlaps the positive electrode surface 5 of the battery A. The other protrusions 15b, 15c are deformed and hold the battery A by energizing the side surface of the battery A. That is, in the present variation, the protrusion 15a corresponds to the protrusion 15 shown in FIGS. 7(a) and FIG. 8, and the protrusions 15b, 15c correspond to the raised portion 16 shown in FIGS. 7(a) and FIG. 8.

As shown in FIG. 14(b), when each of the batteries B, C with smaller thicknesses than the thickness of the battery A is contained in the holding case 10, the protrusion 15b overlaps the positive electrode surface 5 of the battery B, and the protrusion 15c overlaps the positive electrode surface 5 of the battery C.

As described above, a plurality of protrusions 15 are provided at different heights of the side portion 13 of the holding case 10. Thus, even if batteries 1 with different thicknesses are used, one of the protrusions 15 may overlap the positive electrode surface 5 of the battery 1. This is particularly advantageous in preventing a short circuit fault during collection of a replaced battery 1 because the protrusion 15 can overlap the positive electrode surface 5 of the battery 1 when the battery 1 is inserted in the holding case 10 from the positive electrode surface 5 as shown in FIGS. 10(a) to 10(c). Further, the battery 1 accommodated in the holding case 10 can be easily taken out of the holding case 10 by pushing the thin portion 14b formed in the bottom portion 14 of holding case 10.

The above embodiments have been described for the understanding of the present invention. However, the present invention is not limited to these descriptions, and of course, capable of various modifications. For example, in the above embodiments, a blister pack is used as an example of the battery package. However, the battery package is not limited to the blister pack, but may be a pillow package, etc., made of tubular package film, for example.

### INDUSTRIAL APPLICABILITY

The present invention is useful as a battery holding case for accommodating a flat battery used as a power source of an electronic device.

### DESCRIPTION OF REFERENCE CHARACTERS

- 1: flat battery
- 2: negative electrode
- 3: positive electrode
- 4: separator
- 5: battery case (positive electrode surface)
- 6: sealing plate (negative electrode surface)
- 7: gasket
- 10: holding case
- 11: accommodation space
- 12, 12a, 12b: opening
- 13: side portion
- 13a, 13b: open end face
- 14: bottom portion
- 14a: recessed portion
- 14b: thin portion
- 15, 15a, 15b, 15c: protrusion
- 16: raised portion
- 17: tapered surface
- 20: battery package
- 21: base
- 22: main cover
- 23: containing space
- 24: hole
- 30: slit

## Claims

1. A battery holding case for holding a disk-like flat battery, wherein
the flat battery is configured such that a sealing plate which also serves as a first electrode surface hermetically seals a battery case which also serves as a second electrode surface, with a ring-shaped gasket interposed between the battery case and the sealing plate,
the holding case is in a resin-made box-like shape having an open end face through which the flat battery can be inserted and removed from an electrode surface of the flat battery,
a side portion of the holding case is provided with a protrusion which protrudes radially inward from an edge of the side portion closer to the open end face, and
the protrusion is positioned at a location farther from a bottom portion of the holding case than a thickness of the flat battery.

2. The battery holding case of claim 1, wherein
the protrusion is a ring shape, and
an inner diameter of the protrusion is smaller than an outer diameter of the flat battery.

3. The battery holding case of claim 1, wherein
a slit is formed in the side portion of the holding case near the open end face.

4. The battery holding case of claim 1, wherein
the protrusion is integrally formed with the holding case.

5. The battery holding case of claim 1, wherein
the bottom portion of the holding case includes a thin portion which is thinner than the other portion.

6. The battery holding case of claim 1, wherein
the holding case is in a resin-made box-like shape having a first open end face through which the flat battery can be inserted and removed from the electrode surface of the flat battery, and a second open end face which is located opposite to the first open end face and through which the flat battery can be inserted and removed from the electrode surface of the flat battery,
the side portion of the holding case is provided with a first protrusion which protrudes radially inward from an edge of the side portion closer to the first open end face, and a second protrusion which protrudes radially inward from an edge of the side portion closer to the second open end face, and
a distance between the first protrusion and the second protrusion is greater than the thickness of the flat battery.

7. The battery holding case of claim 1, wherein
an emetic agent is applied to an outer surface of the side portion and/or the bottom portion of the holding case.

8. The battery holding case of claim 1, wherein
a direction for use of the flat battery is shown on an outer surface of the bottom portion of the holding case.

9. The battery holding case of claim 2, wherein
the protrusion is supported on an edge of the holding case closer to the open end face in a bendable manner.

10. The battery holding case of claim 1, wherein
an inner diameter of the protrusion is smaller than an inner diameter of an exposed portion of the gasket.

11. A battery package, comprising:
a containing space for containing a flat battery held in the battery holding case of any one of claims 1-10, wherein
the battery package is a blister pack including
a main cover which forms the containing space for containing the flat battery, and
a base which closes a recessed portion of the main cover.
